# EUROPÄISCHE PATENTSCHRIFT

(11) **EP 3 015 340 B1**
(45) Veröffentlichungstag und Bekanntmachung des Hinweises auf die Patenterteilung: **30.08.2017**
(21) Anmeldenummer: 15175507.1
(22) Anmeldetag: 06.07.2015
(51) Int. Cl.: B62B 3/00, B62B 3/02

(54) **ROLLCONTAINER MIT ENTFERNBARER SEITENWAND**
ROLL CONTAINER WITH REMOVABLE SIDE WALL
CONTENEUR ROULANT DOTE DE PAROI LATERALE AMOVIBLE

(30) Priorität: 31.10.2014 DE 102014222250
(43) Veröffentlichungstag der Anmeldung: 04.05.2016
(73) Patentinhaber: WALTHER Faltsysteme GmbH, 47623 Kevelaer (DE)
(72) Erfinder: Dominik, Lemken, 47652 Weeze (DE); Thomas, Walther, 45478 Mülheim/Ruhr (DE)
(74) Vertreter: Ostriga Sonnet Wirths & Vorwerk

(56) Entgegenhaltungen:
- GB-A- 2 008 064
- GB-A- 2 033 847
- GB-A- 2 100 679
- GB-A- 2 200 394

## Beschreibung

Die Erfindung betrifft einen Rollcontainer mit einem Ladeguttisch gemäß dem Oberbegriff von Anspruch 1, dessen Unterseite mit Rollen versehen ist und dessen Oberseite der Aufnahme von Ladung dient, mit einer Ausnehmung im Ladeguttisch, in die eine Seitenwand einsteckbar ist, mit einer in die Ausnehmung einsteckbaren Seitenwand, mit einem Riegelmechanismus, der in einer Offenstellung das Einstecken der Seitenwand In die Ausnehmung ermöglicht und in einer Geschlossenstellung die entlang einer Bewegungsbahn in die Ausnehmung eingesteckte Seitenwand am Ladeguttisch verankert und diese gegenüber einem Herausziehen aus der Ausnehmung sichert.

Derartige Rollcontainer sind aus dem druckschriftlichen nicht belegbaren Stand der Technik bereits bekannt. Es handelt sich um Container, die zwei einander gegenüberliegende, gitterartige Seitenwände aufweisen, zwischen denen die auf dem Ladeguttisch anzuordnenden Güter gehalten sind. Sie finden häufig Verwendung zum Transport von beispielsweise Nahrungsmitteln, die in Kleingebinden verpackt sind. Der wesentliche Vorteil dieser Rollcontainer ist darin zu sehen, dass die einander gegenüberliegenden, gitterartigen Seitenwände die Kleingebinde während des Transports stabilisieren. Gleichzeitig können die Rollcontainer über die offenen Seiten einfach be- und entladen werden. Der Transport der Güter wird dadurch vereinfacht, dass die Rollcontainer vom Bedienpersonal geschoben werden können.

Man ist In der Vergangenheit dazu übergegangen, die ursprünglich mit festen Seitenwänden versehenen Rollcontainer zu modifizieren, um den notwendigen Stauraum beim Transport von leeren Rollcontainern reduzieren zu können. Eine der durchgeführten Veränderungen an den Rollcontainer ist, die Seitenwände demontierbar zu gestalten. Die Seitenwände sind hierzu in jeweils eine Ausnehmung des Ladeguttisches einsetzbar. Um die Seitenwände sicher auf dem Ladeguttisch zu verankern sind Riegelmechanismen vorgesehen. So können die Seitenwände beispielsweise mittels je einer Klammer am Ladeguttisch befestigt werden. Demontierte Seitenwände können auf einem montierten Rollcontainer verpackt werden und die Ladeguttische mehrerer demontierter Rollcontainer lassen sich aufeinander gestapelt anordnen. So lässt sich der Totraum beim Transport leerer Rollcontainer um ein erhebliches Maß reduzieren.

Aus dem Stand der Technik sind noch weitere Riegelmechanismen bekannt. So offenbart z. B. die GB 2 200 394 A einen Rollcontainer gemäß dem Oberbegriff von Anspruch 1, mit einem Riegelmechanismus mit einem drehkreuzartigen Element, welches in eine Richtung drehbar ist und in die andere Richtung durch einen mit einer Federkraft beaufschlagten Riegel gesperrt wird. Dieser Riegelmechanismus sitzt in einer schachteiförmigen und an einer Ecke des Rollcontainers angebrachten Fassung, in welche ein Fuß der Seitenwand eingesetzt werden kann. Beim Einsetzten der Seitenwand wird das drehkreuzartigen Element aus der Bewegungsbahn der Seitenwand gedrückt und gedreht, so dass der Fuß der Seitenwand gesichert wird. Freigegeben wird die Seitenwand durch eine manuelle Betätigung des Riegels.

Ein fußbetätigter Riegelmechanismus ist aus der GB 2 008 064 A bekannt. Der dort beschriebene Riegelmechanismus ist außen an einer am Ladeguttisch angebrachten offengestalteten Lasche angeordnet. Füße der Seitenwand können bei einem geöffneten Riegel in die Lasche eingesetzt und durch manuelle Betätigung des Mechanismus arretiert werden.

Ein wesentlicher Nachteil am Stand der Technik besteht darin, dass bei Fehlbedienung ein Rollcontainer mit nicht sicher verankerter Seitenwand in Benutzung genommen werden konnte. Auch ist die Sicherung der Seitenwand auf dem Ladeguttisch mittels einer Klammer wenig komfortabel, bzw. die manuell betätigten Riegelmechanismen können leicht verklemmen, wobei es unsicher ist ob diese gerade geschlossen oder offen sind.

Es ist Aufgabe der Erfindung, einen Rollcontainer mit Riegelmechanismus für die abnehmbaren Seitenwände zu schaffen, der Fehlbedienungen vermeiden hilft.

Auch eine vereinfachte Verriegelung für die Seitenwände von Rollcontainern ist wünschenswert.

Gelöst wird die Aufgabe von einem Rollcontainer mit den Merkmalen des Anspruches 1, insbesondere mit den kennzeichnenden Merkmalen, wonach der Riegelmechanismus eine um eine Drehachse drehbare Drehfalle (22) aufweist, wobei der Regelmechanismus durch Drehung der Drehfalle um die Drehachse zwischen der Offenstellung und der Geschlossenstellung überführbar ist, und die Gewichtskraft der Seitenwand verriegelnd auf die Drehfalle wirkt.

Der erfindungsgemäße Riegelmechanismus macht ein Hantieren mit Klammern zum Festlegen der Seitenwände auf dem Ladeguttisch überflüssig und vereinfacht so die Montage. Eine fehlerhafte Verriegelung wird durch den automatischen Verriegelungsvorgang sicher vermieden, da ein manueller Eingriff für die sichere Verankerung der Seitenwand am Ladeguttisch nicht erforderlich ist.

Eine mögliche Ausführungsform sieht vor, dass die in die Ausnehmung eingesteckte Seitenwand ein auf die Drehfalle wirkendes Drehmoment erzeugt, das die Drehfalle in Drehung versetzt und den Riegelmechanismus von der Offenstellung in die Geschlossenstellung überführt.

Die Drehfalle ermöglicht es zunächst, die im Wesentlichen translatorische Einschubbewegung der Seitenwand in eine Rotationsbewegung zur Verriegelung umzusetzen. Gleichzeitig gewährleistet die Drehfalle auch eine Entriegelung. Die Drehfalle kann hierbei seitlich versetzt zur die Seitenwand aufnehmenden Ausnehmung des Ladeguttisches angeordnet sein.

Eine Ausführungsform sieht vor, dass der Riegelmechanismus in der Offenstellung wenigstens teilweise über die Oberseite des Ladeguttisches hervorsteht, um die Aufnahme von Ladung zu behindern und/oder um das Einstecken der Seitenwand in die Ausnehmung zu erleichtern.

Durch Behinderung des Beladens wird der Nutzer auf die nicht erfolgte Verriegelung aufmerksam gemacht. Außerdem kann durch den Riegelmechanismus eine trichterartige Einführhilfe geschaffen sein, die das Festlegen der Seitenwand auf dem Ladeguttisch vereinfacht.

Schließlich ist vorgesehen, dass der Riegelmechanismus einen um eine Riegelachse schwenkbaren, im Ladeguttisch eingelassenen Schwenkriegel in Form eines Kipphebels umfasst, dessen Riegelarm in Offenstellung deutlich über die Oberfläche des Ladeguttisches heraussteht und in Geschlossenstellung zumindest mit der Oberfläche des Ladeguttisches abschließt.

Der wesentliche Vorteil des erfindungsgemäßen Rollcontainers liegt darin, dass der Schwenkriegel, welcher Teil des Riegelmechanismus und damit Teil der Verankerung der Seitenwand am Ladeguttisch ist, in seiner Offenstellung über die Oberfläche des Ladeguttisches hinaussteht und so die Beladung des Rollcontainers behindert. Lediglich in Geschlossenstellung ist der Riegelarm in die Oberfläche des Ladeguttisches eingelassen, so dass der Ladeguttisch ungehindert beladen werden kann. Neben der eindeutigen Sichtbarkeit des Verschlusszustandes des Riegelmechanismus durch die Stellung des Riegelarmes und somit einer unzweideutigen optischen Kenntlichmachung des Riegelzustandes wird zur Sicherheit der Benutzung die Beladung des Ladeguttisches bei Offenstellung des Riegelarmes erschwert, wenn nicht gar unmöglich gemacht, um den unsicheren Verankerungszustand der Seitenwand kenntlich zu machen. In dieser doppelten Absicherung liegt der erhebliche Vorteil dieser Erfindung. Kann ein optischer Indikator des Riegelzustandes von nachlässigem Bedienpersonal ignoriert werden, so ist dies bei wesentlich erschwerter bzw. unmöglicher Beladung des Ladeguttisches nicht möglich. Die Sicherheit des Rollcontainers bei seiner Benutzung wird somit wesentlich erhöht.

Es ist vorgesehen, dass die Seitenwand in einem unteren Wandabschnitt eine erste Durchbrechung aufweist, die von einer ersten Strebe begrenzt ist, wobei der Riegelarm in Geschlossenstellung die erste Durchbrechung der Seitenwand durchgreift und die unterhalb der Ladeguttischoberfläche befindliche erste Strebe der Seitenwand übergreift.

Diese Ausführungsform gewährleistet auf ausgesprochen einfache Weise die Riegelwirkung des Riegelarmes, der unmittelbar die Seitenwand am Ladeguttisch verankert.

Von wesentlichem Vorteil ist es, wenn der Kipphebel einen mit dem Riegelarm bewegungsgekoppelten Steuerarm aufweist, der in Offenstellung in der Bewegungsbahn der Seitenwand angeordnet ist und während des Einsteckvorganges der Seitenwand von der ersten Strebe, die Schließbewegung des Riegelhebels induzierend, aus der Bewegungsbahn verdrängt wird.

Diese bevorzugte Ausführungsform gewährleistet ein Verriegeln, dass heißt ein Verschwenken des Riegelarmes in seine Geschlossenstellung und damit die Halterung der Seitenwand auf dem Ladeguttisch durch Verankerung bzw. Übergreifen der Seitenwandstrebe durch das Einsetzen der Seitenwand selbst. Das Einsetzen der Seitenwand erzwingt deshalb geradezu die Verriegelung durch den Schwenkriegel, insbesondere durch seinen Riegelarm.

Die Sicherheit der Verriegelung wird erhöht, wenn die Seitenwand in ihrem unteren Abschnitt zumindest eine zweite Durchbrechung aufweist, die von einer zweiten Strebe begrenzt ist und dass in den Ladeguttisch ein Schubriegel integriert ist, der in Geschlossenstellung in die Ausnehmung des Ladeguttisches eingreift, die zweite Durchbrechung durchgreift und die zweite Strebe übergreift.

Der Schubriegel führt dabei eine Riegelbewegung aus, die ausschließlich quer zur Einsetzrichtung der Seitenwand, dass heißt quer zu ihrer Bewegungsbahn gerichtet ist. Wenn es bei der Schwenkriegelsicherung denkbar ist, dass das Herausheben der Seitenwand in Umkehrung der Schließbewegung die Öffnungsbewegung induziert, ist dies beim Schubriegel nicht denkbar. Der Schubriegel stellt somit eine zusätzliche Verankerung der Seitenwand am Ladeguttisch sicher.

Bei einer bevorzugten Ausführungsform ist vorgesehen, dass der Schubriegel mit einem um eine Schwenkachse schwenkbaren Steuerhebel gekoppelt ist, dessen Koppelarm mit dem Schubriegel in Eingriff steht und dessen Auslösearm in Offenstellung des Schubriegels in der Bewegungsbahn der Seitenwand angeordnet ist, wobei der Auslösearm beim Einstecken der Seitenwand in die Ausnehmung von der zweiten Strebe aus der Bewegungsbahn verdrängt wird und der Koppelarm den Schubriegel in Geschlossenstellung bewegt.

Der wesentliche Vorteil bei dieser besonders bevorzugten Ausführungsform ist darin zu sehen, dass die Verriegelungsbewegung des Schubriegels durch das Einsetzen der Seitenwand in die Ausnehmung des Ladeguttisches erzwungen wird. Der Steuerhebel führt hierzu gleich dem Schwenkriegel eine Schwenkbewegung aus, die jedoch durch die Kopplung mit Schubriegel von einer Rotationsbewegung in eine Linearbewegung gewandelt wird. Da der Steuerhebel, namentlich dessen Auslösearm, in Entnahmerichtung der Seitenwand mit letzterer ungekoppelt ist, kann das Herausheben der Seitenwand aus der Ausnehmung des Ladeguttisches eine Öffnungsbewegung induzieren. In vorteilhafter Weise ist also ein selbsttätiges Verriegeln des Schubriegels beim Einsetzen der Seitenwand in die Ausnehmung des Ladeguttisches gewährleistet, die Bewegungskopplung zwischen Steuerhebel und Seitenwand bei Entnahme jedoch unterbrochen, so dass die Öffnung des Schubriegels gesondert zu induzieren ist.

Dies wird erreicht, indem die Riegelachse des Kipphebels und die Schwenkachse des Steuerhebels miteinander bewegungsgekoppelt sind, so dass die Schließbewegung des einen in der Schließbewegung des anderen resultiert, insbesondere wenn die Riegelachse und die Schwenkachse identisch sind.

Bei dieser Ausführungsform wird der Schwenkriegel mit dem wenigstens einem Schubriegel bewegungsgekoppelt ausgestaltet. Schubriegel und Riegelarm des Schwenkriegels liegen in Geschlossenstellung in derselben Ebene. In Offenstellung geben sie die Aufnahme zum Einsetzen der Seitenwand frei. Wird nun die Seitenwand in den Aufnahmeraum eingebracht trifft deren untere erste und zweite Strebe auf den Steuerarm des Schwenkriegels sowie auf den Auslösearm des mit dem Schubriegel gekoppelten Steuerhebels. Diese werden aus der Bewegungsbahn der Seitenwand verdrängt und führen dazu, dass Schubriegel und Schwenkriegel in Geschlossenstellung bewegt werden. Der Riegelarm des Schwenkriegels sowie die Schubriegel befinden sich nun in einer gemeinsamen Ebene, so dass eine Gegenbewegung der Seitenwand aus der Ausnehmung heraus in jedem Fall durch die Schubriegel blockiert ist. Wird jedoch der Schwenkriegel in Offenstellung bewegt, wird dem Steuerhebel des Schubriegels eine Bewegung aufgezwungen, die der Schließrichtung entgegengesetzt ist. Bei dieser Bewegung wird der Schubriegel durch den Eingriff des Steuerhebels von seiner Geschlassenstellung zurück in seine Offenstellung bewegt, so dass die Seitenwand frei zur Entnahme ist.

In der Quintessenz bedeutet dies, dass diese besonders bevorzugte Kombination aus Schwenkriegel und Schubriegel eine absolut sichere Verankerung der Seitenwand am Ladeguttisch gewährleistet, die nur durch eine durch Bedienpersonal vorzunehmende, aktive Öffnungsbewegung des Schwenkriegels aufgehoben werden kann. Gleichzeitig gewährleistet der Schwenkriegel den vorerwähnten Vorteil, dass das Bedienpersonal an der sicheren Verriegelung der Seitenwand am Ladeguttisch vor Benutzung des Rollcontainers nicht vorbeikommt. Die Verriegelung wird demzufolge erzwungen und kann nur durch aktives Eingreifen des Bedienpersonals wieder gelöst werden.

Schließlich ist vorgesehen, dass der Kipphebel in etwa mittig und jeweils ein Schubriegel im vorderen und hinteren Bereich der zur Aufnahme der Seitenwand vorgesehenen Ausnehmung angeordnet ist.

Bei dieser bevorzugten Ausführungsform wird die Seitenwand somit an drei Abschnitten am Ladeguttisch verankert und gesichert.

Weitere Vorteile der Erfindung ergeben sich aus der nachfolgenden Beschreibung eines Ausführungsbeispiels. Es zeigen:
- Figur 1: Einen erfindungsgemäßen Rollcontainer in perspektivischer Darstellung,
- Figur 2: eine Teildarstellung des Rollcontainers gemäß Figur 1 in Seitenansicht, geschnitten entlang einer durch die Seitenwand aufgespannten Schnittebene.
- Figur 3: eine Teildarstellung des Rollcontainers in Figur 1, quer geschnitten durch den Schwenkriegel mit Schwenkriegel in Geschlossenstellung,
- Figur 4: die Schnittdarstellung gemäß Figur 3 mit Schwenkriegel in Offenstellung,
- Figur 5: eine Teildarstellung des Rollcontainers gemäß Figur 1, quer geschnitten durch den Schubriegel mit Schubriegel in Geschlossenstellung,
- Figur 6: die Darstellung gemäß Figur 5 mit Schubriegel in Offenstellung.

In den Figuren ist ein Rollcontainer gemäß Erfindung insgesamt mit der Bezugsziffer 10 versehen.

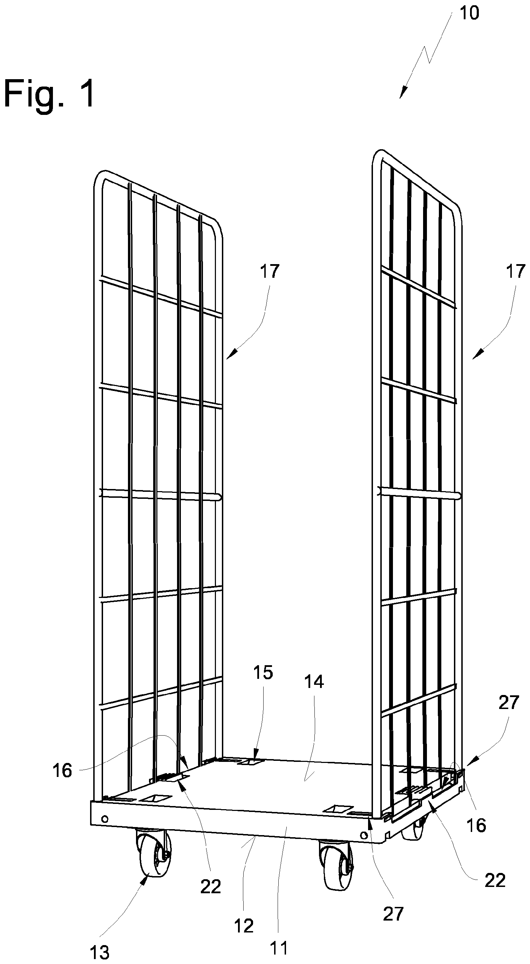

Der Rollcontainer 10 ist in seiner Gesamtheit in Figur 1 dargestellt. Er umfasst, gleichsam als Basis, einen Ladeguttisch 11, dessen Unterseite 12 mit Rollen 13 versehen ist. Die Oberseite 14 des Ladeguttisches 11 weist vier Vertiefungen 15 auf, die der Aufnahme von Rollen 13 eines zweiten Ladeguttisches dienen.

An der rechten wie linken Seite, also einander gegenüberliegend, ist der Ladeguttisch 11 mit je einer Ausnehmung 16 versehen. In jeder Ausnehmung 16 ist eine Seitenwand 17 eingesetzt. Zwischen der rechten und linken Seite bildet der Ladeguttisch 11 eine Vorder- und eine Rückseite aus, die frei zugänglich, dass heißt ohne Seitenwand 17 bestückt sind.

Im vorliegenden Ausführungsbeispiel sind die Seitenwände 17 als Gitterwände ausgebildet, die durch Querstreben 18 und Längsstreben 19 begrenzte Durchbrechungen 20 bilden. Von Relevanz für die Erfindung sind die Durchbrechungen 20 des unteren Wandabschnittes, die im vorliegenden Ausführungsbeispiel von einer unteren Querstrebe 21 begrenzt sind.

Die untere Querstrebe 21 dient in Verbindung mit einem nachfolgend zu erläuterten Riegelmechanismus der Verankerung der Seitenwand 17 in der jeweiligen Ausnehmung 16.

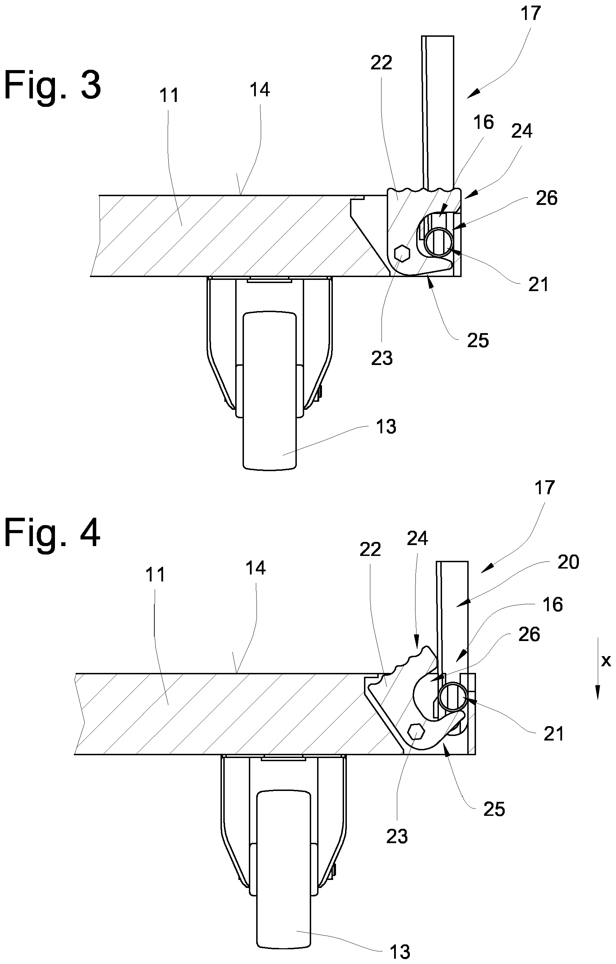

Der Riegelmechanismus umfasst zunächst einen in den Figuren 3 und 4 in Offen- bzw. Geschlossenstellung gezeigten Schwenkriegel 22. Der Schwenkriegel 22 ist um eine Riegelachse 23 verschwenkbar in der Ausnehmung 16 gelagert und in Form eines Kipphebels ausgeführt. Er umfasst einen Riegelarm 24, der mit einem Steuerarm 25 bewegungsgekoppelt ist. Zwischen dem Riegelarm 24 und dem Steuerarm 25 befindet sich ein Freiraum 26, in welchem bei geschlossenem Schwenkriegel 22 die untere Querstrebe 21 gehalten ist.

Der Riegelarm 24 ist der Oberseite 14 des Ladeguttisches 11 zugewandt und steht in der in Figur 4 gezeigten Offenstellung über die Oberfläche des Ladeguttisches 11 hervor. In dieser Stellung gibt er die Ausnehmung 16 zum Einsetzen der Seitenwand 17 in Einsetzrichtung X frei. Der Steuerarm 25 ist in dieser Offenstellung des Schwenkriegels 22 in der Bewegungsbahn der Seitenwand 17 gelegen, entlang derer die Seitenwand 17 in die Ausnehmung 16 eingesetzt wird.

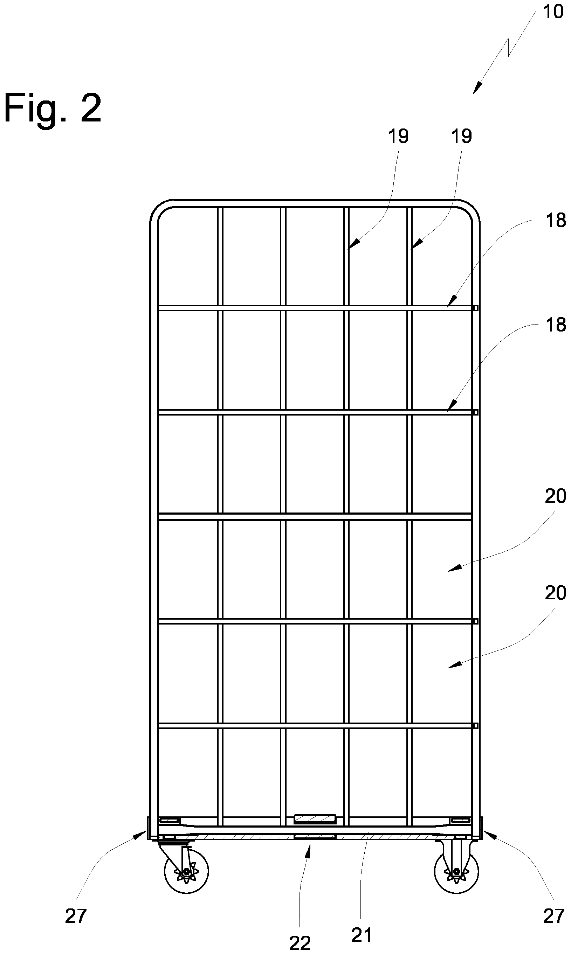

Beim Einsetzen der Seitenwand 17 in die Ausnehmung 16 trifft die untere Querstrebe 21 auf den Steuerarm 25 und drängt diesen in ein Einsetzrichtung X aus der Bewegungsbahn heraus. Hierbei wird der Schwenkriegel 22 um die Riegelachse 23 herum bewegt, wodurch der Riegelarm 24 in seine Geschlossenstellung verschwenkt wird. Dabei durchdringt er eine Durchbrechung 20 der Seitenwand 17 und übergreift die untere Querstrebe 21 verriegelnd in seiner Geschlossenstellung. In dieser Geschlossenstellung schließt er mit der Oberfläche der Oberseite 14 des Ladeguttisches 11 ab und steht nicht länger wesentlich über sie hinaus. Wie an Hand der Figuren 1 und 2 erkennbar ist, ist der Schwenkriegel 22 etwa mittig an der rechten bzw. linken Seite des Ladeguttisches 11 angebracht.

In anderen Worten bildet die mechanische Konstruktion mit dem um die Riegelachse 23 verschwenkbaren Schwenkriegel 22 eine Drehfalle 22, die um eine Drehachse 23 drehbar ist, wobei die Gewichtskraft der in die Ausnehmung 16 gesteckten Seitenwand 17 ein Drehmoment auf die Drehfalle 22 erzeugt, die ein selbsttätiges Überführen des Regelmechanismus von der Offenstellung in die Geschlossenstellung bewirkt.

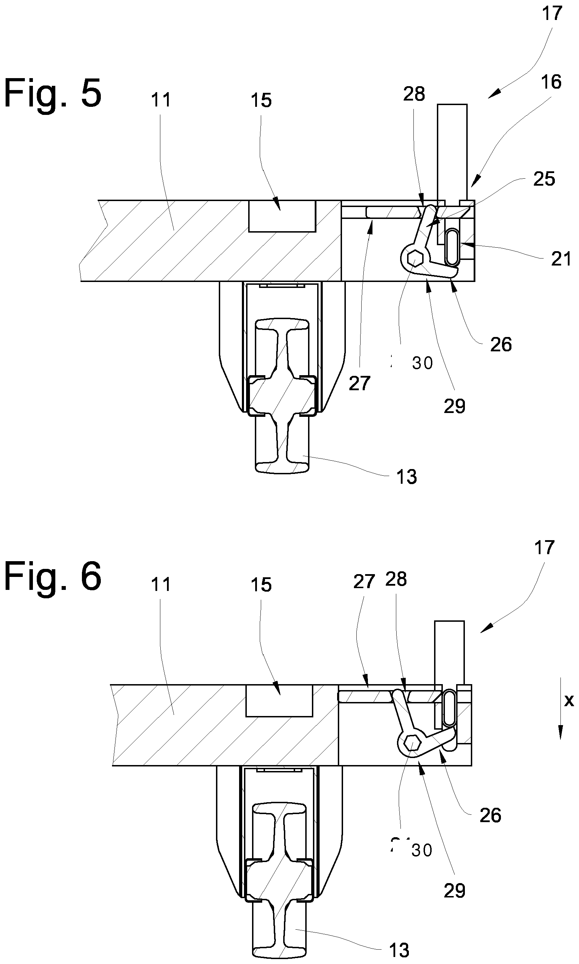

Der Riegelmechanismus umfasst ferner Schubriegel 27, von denen einer in Geschlossenstellung in Figur 5 und in Offenstellung in Figur 6 dargestellt ist. Im Übrigen ist aus Figur 1 und 2 ersichtlich, dass sich die Schubriegel 27 im vorderen bzw. hinteren Bereich der rechten und linken Seite des Ladeguttisches 11 befinden.

Der Schubriegel 27 ist schubbeweglich im Ladeguttisch 11 gelagert und weist einen Eingriffsschlitz 28 auf. Zur Betätigung des Schubriegels 27, also um diesen in seine Offen- bzw. Geschlossenstellung zu verbringen, ist ein Steuerhebel 29 vorgesehen, der seinerseits schwenkbeweglich um eine Schwenkachse 30 angeordnet ist.

Der Steuerhebel 29 verfügt über einen Koppelarm 31 und einen Auslösearm 32. Der Koppelarm 31 greift in den Eingriffsschlitz 28 des Schubriegels 27 ein, wohingegen der mit dem Koppelarm 31 bewegungsverbundene Auslösearm 32 wiederum in Offenstellung des Schubriegels 27 in der Bewegungsbahn der Seitenwand 17 angeordnet ist.

In dieser Stellung gibt der Schubriegel 27 die Ausnehmung 16 des Ladeguttisches 11 frei, so dass die Seitenwand 17 entlang ihrer Bewegungsbahn in Einsetzrichtung X in die Ausnehmung 16 hineingeschoben werden kann. Dabei trifft sie auf den Auslösearm 32 und verdrängt diesen aus der Bewegungsbahn. Dies hat ein Verschwenken des Steuerhebels 29 um die Schwenkachse 30 zur Folge, wobei der in den Eingriffsschlitz 28 eingreifende Koppelarm 31 den Schubriegel 27 in seine Geschlossenstellung bewegt. In dieser durchgreift der Schubriegel 27 eine Ausnehmung 16 der Seitenwand 17 und übergreift die untere Querstrebe 21. Auf diese Weise ist die Seitenwand 17 in der Ausnehmung 16 gesichert.

Soll die Seitenwand 17 entgegen der Einsetzrichtung X aus der Ausnehmung 16 herausgezogen werden, ist dieses ohne Öffnen der Schubriegel 27 nicht möglich. Um die Schubriegel 27 zu öffnen, ist vorgesehen, dass die Riegelachse 23 und Schwenkachse 30 wenigstens bewegungsgekoppelt miteinander verbunden sind. In bevorzugter Ausführungsform sind sie identisch. Auf diese Weise ist es möglich, den Schwenkriegel 22 in Offenstellung zu bewegen und die dafür vollzogene Schwenkbewegung über die Achsen 23 und 30 auf den Steuerhebel 29 zu übertragen. Dieser bewegt dann den Schubriegel 27 in seine Offenstellung, Indem er die Rotationsbewegung in eine Linearbewegung zum Verschieben des Schubriegels 27 umsetzt.

Da der Riegelarm 24 des Schwenkriegels 22 in seiner Offenstellung gemäß Figur 4 deutlich über die Oberfläche der Oberseite 14 des Ladeguttisches 11 herausragt, ist ein Beladen des Ladeguttisches 11 und damit eine Benutzung des Rollcontainers 10 bei nicht korrekt eingesetzter und durch Verriegelung gesicherter Seitenwand 17 stark erschwert. Erst bei geschlossenem Schwenkriegel 22 schließt der Riegelarm 24 im Wesentlichen mit der Oberfläche der Oberseite 14 des Ladeguttisches 11 ab, so dass ohne Behinderung Ladegut auf den Ladeguttisch 11 aufgesetzt werden kann. In der Geschlossenstellung ist auch sichergestellt, dass die Schubriegel 27 die Seitenwand 17 durch Übergreifen der unteren Querstrebe 21 in der Ausnehmung 16 sicher halten, da die schließende Schwenkbewegung des Schwenkriegels 22 über die Achsen 23 und 30 ein Verschwenken des Steuerhebels 29 in Geschlossenstellung und durch dessen Eingriff in den Schubriegel 27, diesen in Geschlossenstellung mitziehend, eine sichere Verriegelung gewährleistet.

### Bezugszeichenliste:

- 10: Rollcontainer
- 11: Ladeguttisch
- 12: Unterseite
- 13: Rollen
- 14: Oberseite
- 15: Vertiefung
- 16: Ausnehmung
- 17: Seitenwand
- 18: Querstrebe
- 19: Längsstrebe
- 20: Durchbrechung
- 21: untere Querstrebe
- 22: Schwenkriegel (Drehfalle)
- 23: Riegelachse (Drehachse)
- 24: Riegelarm
- 25: Steuerarm
- 26: Freiraum
- 27: Schubriegel
- 28: Eingriffsschlitz
- 29: Steuerhebel
- 30: Schwenkachse
- 31: Koppelarm
- 32: Auslösearm

- X: Einsetzrichtung

## Patentansprüche

1. Rollcontainer (10)
mit einem Ladeguttisch (11), dessen Unterseite (12) mit Rollen (13) versehen ist und dessen Oberseite (14) der Aufnahme von Ladung dient, mit einer Ausnehmung (16) im Ladeguttisch (11), in die eine Seitenwand (17) einsteckbar ist,
mit einer in die Ausnehmung (16) einsteckbaren Seitenwand (17),
mit einem Riegelmechanismus, der in einer Offenstellung das Einstecken der Seitenwand (17) in die Ausnehmung (16) ermöglicht und in einer Geschlossenstellung die entlang einer Bewegungsbahn in die Ausnehmung (16) eingesteckte Seitenwand (17) am Ladeguttisch (11) verankert und diese gegenüber einem Herausziehen aus der Ausnehmung (16) sichert, und der Riegelmechanismus durch Einstecken der Seitenwand (17) in die Ausnehmung (16) entlang der Bewegungsbahn selbsttätig von der Offenstellung in die Geschlossenstellung überführt wird **dadurch gekennzeichnet, dass**. der Riegelmechanismus eine um eine Drehachse (23) drehbare Drehfalle (22) aufweist, wobei der Riegelmechanismus durch Drehung der Drehfalle (22) um die Drehachse (23) zwischen der Offenstellung und der Geschlossenstellung überführbar ist, und die Gewichtskraft der Seitenwand verriegelnd auf die Drehfalle wirkt.

2. Rollcontainer nach Anspruch 1, **dadurch gekennzeichnet, dass** die in die Ausnehmung (16) eingesteckte Seitenwand (17) ein auf die Drehfalle (22) wirkendes Drehmoment erzeugt, das die Drehfalle (22) in Drehung versetzt und den Riegelmechanismus von der Offenstellung in die Geschlossenstellung überführt.

3. Rollcontainer nach einem der vorhergehenden Ansprüche, **dadurch gekennzeichnet, dass** der Riegelmechanismus in der Offenstellung wenigstens teilweise über die Oberseite (14) des Ladeguttisches (11) hervorsteht, um die Aufnahme von Ladung zu behindern und/oder um das Einstecken der Seitenwand (17) in die Ausnehmung (16) zu erleichtern.

4. Rollcontainer nach einem der vorhergehenden Ansprüche, **dadurch gekennzeichnet, dass** der Riegelmechanismus einen um eine Riegelachse (23) schwenkbaren, im Ladeguttisch (11) eingelassenen Schwenkriegel (22) in Form eines Kipphebels umfasst, dessen Riegelarm (24) in Offenstellung deutlich über die Oberfläche des Ladeguttisches (11) heraussteht und in Geschlossenstellung zumindest mit der Oberfläche des Ladeguttisches (11) abschließt.

5. Rollcontainer nach Anspruch 4, **dadurch gekennzeichnet, dass** die Seitenwand (17) in einem unteren Wandabschnitt eine erste Durchbrechung (20) aufweist, die von einer ersten Strebe begrenzt ist, wobei der Riegelarm (24) in Geschlossenstellung die erste Durchbrechung (20) der Seitenwand (17) durchgreift und die unterhalb der Ladeguttischoberfläche befindliche erste Strebe der Seitenwand (17) übergreift.

6. Rollcontainer nach Anspruch 4 oder 5, **dadurch gekennzeichnet, dass** der Kipphebel einen mit dem Riegelarm (24) bewegungsgekoppelten Steuerarm (25) aufweist, der in Offenstellung in der Bewegungsbahn der Seitenwand (17) angeordnet ist und während des Einsteckvorganges der Seitenwand (17) von der ersten Strebe, die Schließbewegung des Riegelhebels induzierend, aus der Bewegungsbahn verdrängt wird.

7. Rollcontainer nach einem Ansprüche 4 bis 6, **dadurch gekennzeichnet, dass** die Seitenwand (17) in ihrem unteren Abschnitt zumindest eine zweite Durchbrechung aufweist, die von einer zweiten Strebe begrenzt ist und dass in den Ladeguttisch (11) ein Schubriegel (27) integriert ist, der in Geschlossenstellung in die Ausnehmung (16) des Ladeguttisches (11) eingreift, die zweite Durchbrechung durchgreift und die zweite Strebe übergreift.

8. Rollcontainer nach Anspruch 7, **dadurch gekennzeichnet, dass** der Schubriegel (27) mit einem um eine Schwenkachse (30) schwenkbaren Steuerhebel (29) gekoppelt ist, dessen Koppelarm (31) mit dem Schubriegel (27) in Eingriff steht und dessen Auslösearm (32) in Offenstellung des Schubriegels (27) in der Bewegungsbahn der Seitenwand (17) angeordnet ist, wobei der Auslösearm (32) beim Einstecken der Seitenwand (17) in die Ausnehmung (16) von der zweiten Strebe aus der Bewegungsbahn verdrängt wird und der Koppelarm (31) den Schubriegel (27) in Geschlossenstellung bewegt.

9. Rollcontainer nach Anspruch 4 und 7, **dadurch gekennzeichnet, dass** die Riegelachse (23) des Kipphebels und die Schwenkachse (30) des Steuerhebels (29) miteinander bewegungsgekoppelt sind, so dass die Schließbewegung des einen in der Schließbewegung des anderen resultiert.

10. Rollcontainer nach Anspruch 8 oder 9, **dadurch gekennzeichnet, dass** die Riegelachse (23) und die Schwenkachse (30) identisch sind.

11. Rollcontainer nach Anspruch 4 und 7, **dadurch gekennzeichnet, dass** der Kipphebel in etwa mittig und jeweils ein Schubriegel (27) im vorderen und hinteren Bereich der zur Aufnahme der Seitenwand (17) vorgesehenen Ausnehmung (16) angeordnet ist.

## Claims

1. Roll container (10)
having a loading platform (11), the bottom face (12) of which is provided with castors (13) and the top face (14) of which is used to accommodate loads,
having a recess (16) in the loading platform (11) in which a side wall (17) can be inserted,
having a side wall (17) which can be inserted in the recess (16),
having a lock mechanism which enables the side wall (17) to be inserted in the recess (16) in an open position and in a closed position anchors the side wall (17) inserted in the recess (16) along a travel path on the loading platform (11) and prevents it from being pulled out of the recess (16), and the lock mechanism is automatically switched from the open position into the closed position by inserting the side wall (17) in the recess (16) along the travel path,
**characterised in that** the lock mechanism has a rotating catch (22) rotatable about a rotating pin (23), and the lock mechanism can be switched between the open position and the closed position by rotating the rotating catch (22) about the rotating pin (23), and the weight force of the side wall acts on the rotating catch in a locking action.

2. Roll container as claimed in claim 1, **characterised in that** the side wall (17) inserted in the recess (16) generates a torque acting on the rotating catch (22) which moves the rotating catch (22) in rotation and switches the lock mechanism from the open position into the closed position.

3. Roll container as claimed in one of the preceding claims, **characterised in that** the lock mechanism protrudes at least partially above the top face (14) of the loading platform (11) in the open position in order to prevent loads from being accommodated and/or to facilitate insertion of the side wall (17) in the recess (16).

4. Roll container as claimed in one of the preceding claims, **characterised in that** the lock mechanism comprises a swivel lock (22) in the form of a rocker arm recessed into the loading platform (11) which can be pivoted about a lock pin (23), the locking arm (24) of which protrudes above the surface of the loading platform (11) to a significant degree in the open position and sits at least flush with the surface of the loading platform (11) in the closed position.

5. Roll container as claimed in claim 4, **characterised in that** the side wall (17) has a first opening (20) in a bottom wall section which is bounded by a first strut, and the locking arm (24) extends through the first opening (20) of the side wall (17) and above the first strut of the side wall (17) located underneath the loading platform surface in the closed position.

6. Roll container as claimed in claim 4 or 5, **characterised in that** the rocker arm has a control arm (25) moved in a coupled arrangement with the locking arm (24) which is disposed in the travel path of the side wall (17) in the open position and is forced out of the travel path by the first strut inducing the closing movement of the locking arm during the process of inserting the side wall (17).

7. Roll container as claimed in one of claims 4 to 6, **characterised in that** the side wall (17) has at least a second opening in its bottom section which is bounded by a second strut and a sliding lock (27) is integrated in the loading platform (11) which extends into the recess (16) of the loading platform (11), through the second opening and above the second strut in the closed position.

8. Roll container as claimed in claim 7, **characterised in that** the sliding lock (27) is coupled with a control lever (29) which can be pivoted about a pivot pin (30), the coupling arm (31) of which is engaged with the sliding lock (27) and the trigger arm (32) of which is disposed in the travel path of the side wall (17) when the sliding lock (27) is in the open position, and the trigger arm (32) is forced out of the travel path by the second strut as the side wall (17) is inserted in the recess (16) and the coupling arm (31) moves the sliding lock (27) into the closed position.

9. Roll container as claimed in claims 4 and 7, **characterised in that** the lock pin (23) of the rocker arm and the pivot pin (30) of the control lever (29) move in a coupled arrangement with one another so that the closing movement of the one results in the closing movement of the other.

10. Roll container as claimed in claim 8 or 9, **characterised in that** the lock pin (23) and the pivot pin (30) are identical.

11. Roll container as claimed in claims 4 and 7, **characterised in that** the rocker arm is disposed approximately centrally and a sliding lock (27) is disposed respectively in the front and rear region of the recess (16) provided for accommodating the side wall (17).

## Revendications

1. Conteneur roulant (10) avec une table de chargement (11), dont la face inférieure (12) est munie de roulettes (13) et dont la face supérieure (14) sert de réception au chargement, avec un évidement (16) dans la table de chargement (11), dans lequel peut être insérée une paroi latérale (17), avec une paroi latérale (17) pouvant être insérée dans l'évidement (16), avec un mécanisme de verrouillage, qui permet d'insérer, dans une position ouverte, la paroi latérale (17) dans l'évidement (16) et qui ancre, dans une position fermée, la paroi latérale (17) insérée le long d'une voie de déplacement dans l'évidement (16), au niveau de la table de chargement (11), et qui sécurise celle-ci contre toute sortie de l'évidement (16), et le mécanisme de verrouillage est passé, automatiquement, par insertion de la paroi latérale (17) dans l'évidement (16), le long de la voie de déplacement, de la position ouverte à la position fermée, **caractérisé en ce que** le mécanisme de verrouillage présente un loquet rotatif (22) pouvant tourner autour d'un axe de rotation (23), le mécanisme de verrouillage pouvant être passé par rotation du loquet rotatif (22) autour de l'axe de rotation (23) entre la position ouverte et la position fermée, et la force de poids de la paroi latérale, agissant, en verrouillant, sur le loquet rotatif.

2. Conteneur roulant selon la revendication 1, **caractérisé en ce que** la paroi latérale (17) insérée dans l'évidement (16) crée un moment de rotation agissant sur le loquet rotatif (22) qui déplace le loquet rotatif (22) en rotation et fait passer le mécanisme de verrouillage de la position ouverte à la position fermée.

3. Conteneur roulant selon l'une des précédentes revendications, **caractérisé en ce que** le mécanisme de verrouillage est saillant, en position ouverte, au moins en partie sur la face supérieure (14) de la table de chargement (11), afin d'empêcher la réception de la charge et/ou afin de faciliter l'insertion de la paroi latérale (17) dans l'évidement (16).

4. Conteneur roulant selon l'une des précédentes revendications, **caractérisé en ce que** le mécanisme de verrouillage comprend un verrou pivotant (22) encastré dans la table de chargement (11), pouvant pivoter autour d'un axe de verrouillage, sous la forme d'un levier basculant, dont le bras de verrouillage (24) est saillant, en position ouverte, significativement, sur la face supérieure de la table de chargement (11) et au moins au ras, en position fermée, de la face supérieure de la table de chargement (11).

5. Conteneur roulant selon la revendication 4, **caractérisé en ce que** la paroi latérale (17) présente, dans une partie de la paroi inférieure, un premier percement (20) qui est limité par un premier montant, le bras de verrouillage (24) pénétrant, en position fermée, le premier percement (20) de la paroi latérale (17) et saisissant par-dessus le premier montant, situé en dessous de la face de la table de chargement, de la paroi latérale (17).

6. Conteneur roulant selon la revendication 4 ou 5, **caractérisé en ce que** le levier basculant présente un bras de commande (25) couplé en mouvement avec le bras de verrouillage (24), qui, en position ouverte, est disposé dans la voie de déplacement de la paroi latérale (17) et qui, pendant l'action d'insertion de la paroi latérale (17), du premier montant, est évincé de la voie de déplacement, provoquant le mouvement de fermeture du levier de verrouillage.

7. Conteneur roulant selon l'une des revendications 4 à 6, **caractérisé en ce que** la paroi latérale (17) présente dans sa partie inférieure, au moins un deuxième percement, qui est limité par un deuxième montant et **en ce que** dans la table de chargement (11), est intégré un verrou glissant (27) qui, en position fermée, vient en prise dans l'évidement (16) de la table de chargement (11), pénètre le deuxième percement et saisit par-dessus le deuxième montant.

8. Conteneur roulant selon la revendication 7, **caractérisé en ce que** le verrou glissant (27) est couplé avec un levier de commande (29) pouvant pivoter autour d'un axe de pivotement (30), dont le bras d'accouplement (31) est en prise avec le verrou glissant (27) et dont le bras de déclenchement (32) est disposé, en position ouverte du verrou glissant (27), dans la voie de déplacement de la paroi latérale (17), le bras de déclenchement (32) étant évincé, lors de l'insertion de la paroi latérale (17) dans l'évidement (16), du deuxième montant, de la voie de déplacement et le bras d'accouplement (31) déplaçant le verrou glissant (27) en position fermée.

9. Conteneur roulant selon la revendication 4 et 7, **caractérisé en ce que** l'axe de verrouillage (23) du levier basculant et l'axe de pivotement (30) du levier de commande (30) sont couplés ensemble en mouvement, de sorte que le mouvement de fermeture de l'un résulte dans le mouvement de fermeture de l'autre.

10. Conteneur roulant selon la revendication 8 ou 9, **caractérisé en ce que** l'axe de verrouillage (23) et l'axe de pivotement (30) sont identiques.

11. Conteneur roulant selon la revendication 4 et 7, **caractérisé en ce que** le levier basculant est disposé à peu près au milieu, et à chaque fois, un verrou glissant (27), dans la zone avant et arrière de l'évidement (16) prévu pour la réception de la paroi latérale (17).
